# EUROPEAN PATENT APPLICATION

(11) **EP 1 481 927 A1**
(43) Date of publication of application: **01.12.2004**
(21) Application number: 03011058.9
(22) Date of filing: 20.05.2003
(51) Int. Cl.: B65G 63/00

(54) **Assembled-type automatic container loading/unloading system**

(71) Applicant: Amity Investment Pte Ltd, Singapore 638931 (SG)
(72) Inventor: Cheng, I Hung, Taishan Hsiang, Taipei Hsien (TW)
(74) Representative: Banzer, Hans-Jörg, Dipl.-Ing.

(57) **Abstract**

An assembled-type automatic container loading and unloading system comprises a plurality of vertical frames (201), a plurality of transverse frames (202,203), and a plurality of longitudinal frames (204,205) all kinds of which are perpendicularly connected to each other to form a main structure body (200), at which first side the transverse tracks parallel to the transverse frames and carts are provided. A loading and unloading area for land transportation is provided at the second side opposite to the first side. The longitudinal frames (204,205) in two layers are equipped with cranes (209,210) at the uper side of the main structure body (200). The cranes, including the whole-area bridge crane (209) on the upper longitudinal frame layer and the local gantry crane (210) on the lower longitudinal frame layer, extend between adjacent longitudinal frames. All the frames are made of steel. Besides, the container loading and unloading system may incorporate with a current hoist or integrate with a plurality of hoists.

## Description

### Field of the Invention

The present invention generally relates to a container loading and unloading system and more particularly, to an assembled-type automatic container loading and unloading system.

### Background of the Invention

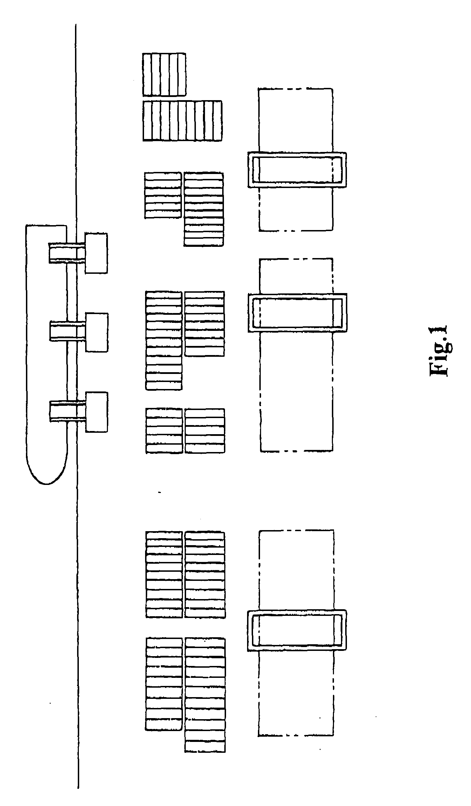

Fig. 1 is a top plan view of a current container center at a commercial port and illustrates the container center closely abutting the commercial port. The container center lasts for hundreds of meters in size and is paved with reinforced concrete. Furthermore, in order to meet the draft of a large container ship, the port must be filled up, which however greatly increases the cost of the hardware of the port.

The above-described current container center has the following deficiencies. First, as illustrated in Fig. 1, a number of containers are placed in different direction in different areas of the container center. Then, by traveling among the areas of an overhead crane, the containers are rearranged, loading, unloading, and transported. In another aspect, the container center must be left large vacant space to be convenient for a truck to travel in the container center, which lows down the efficiency of the use of the land.

Besides, the containers are transported to the particular positions in the container center by the trucks one by one and unloaded by an overhead crane. Then, they are further transported to the host on the seashore at appointed time by the trucks or the driverless carts. Finally the containers are carried onto a container ship. The above-described container loading process spends so much human efforts and time that the operating cost of container importation, exportation, and transportation is very high.

In view of enhancing the efficiency of container- handling at the container center, the container docks all over the world try to induce a computer system so as to assist in handling the container, which includes conducting the operators on the bridge hoist, the gate gantry and the overhead crane through an ultra frequency channel set in a control center to handle the containers and dispensing the cargoes therein in time, managing the entering of the truck into the container yard by means of a computer card-reading system to identify and trace the activities of the trucks in the dock, the planning of the ship position, the planning of the sites in the container yard, and the exchanging of electronic data...etc. However, the above-described measures, which are still far away from the object of overall automation, can only assist in the current mode transportation through human efforts.

In consideration of the cost about trans-ocean shipping, the larger container ship for pelagic transportation of the container is the more economic so that it is desirable to collect the smaller quantity of containers from different place to a transfer center so as to further transport to another place. The efficiency of container loading and unloading has become an important factor about ability of competition of a container wharf. Due to the above-described reasons, the current container loading and unloading system suffers an obstacle difficult to overcome in cost down.

### Summary of the Invention

Accordingly, the present invention is directed to an assembled-type automatic loading and unloading system that can substantially obviate one or more of the problems due to the limitations and disadvantages of the related arts by means of using computer control apparatus for automatically loading and unloading the containers.

One object of the present invention is the provision of an assembled-type automatic loading and unloading system which can largely upgrade the container loading and unloading efficiency.

Another object of the present invention is the provision of an assembled-type automatic loading and unloading system of which cost in construction is much lower than that of the current container wharf.

Another object of the present invention is the provision of an assembled-type automatic loading and unloading system which land used is far less than that of the current container wharf.

Another object of the present invention is the provision of an assembled-type automatic loading and unloading system which size is changeable according to the number of the containers handled.

Additional features and advantages of the invention will be set forth in the description which follows, and in part will be apparent from the description, or may be learned by practice of the invention. The objectives and advantages of the invention will be realized and attained by the structure particularly pointed out in the written description and claims hereof as well as the appended drawings.

According to the present invention, these objects are achieved by an assembly-type automatic container loading and unloading system as defined in claim 1. The dependent claims define preferred and advantageous embodiments of the invention.

To achieve these and other advantages and according to the purpose of the present invention, as embodied and broadly described, an assembled-type automatic container loading and unloading system comprises a plurality of vertical frames, a plurality of transverse frames, and a plurality of longitudinal frames, all kinds of frames being perpendicularly connected to each other to form a main structure body, at which first side the transverse tracks parallel to the transverse frames and carts are provided. A loading and unloading area for land transportation is provided at the second side opposite to the first side. The longitudinal frames in two layers are equipped at the upper side of the main structure body. The cranes, including the whole-area bridge crane on the upper longitudinal frame layer and the local gantry crane on the lower longitudinal frame layer, extend between adjacent longitudinal frames. All the frames are made of steel.

It is preferred that an assembled-type automatic container loading and unloading system further comprises at least a hoist installed near the first side.

It is preferred that an assembled-type automatic container loading and unloading system further comprises at least a hoist integrated with the main structure at the first side.

It is preferred that an assembled-type automatic container loading and unloading system further comprises a platform, traveling up and down, extending between the adjacent vertical frames for temporally setting the container.

It is preferred that the number of the structure units lined in transverse direction of an assembled-type automatic container loading and unloading system is defined as that of the row structure bodies, the number of the structure units lined in the longitudinal direction is defined as that of the column structure bodies, and the number of the transverse tracks equals to that of the row structure units.

It is preferred that the local gantry and the whole-area bridge crane of an assembled-type automatic container loading and unloading system are controlled by a computer system.

It is to be understood that both the forging general description and the following detailed description are exemplary and explanatory and are intended to provide further explanation of the invention as claimed.

### Brief Description of the Drawings

The accompanying drawings, which are included to provide a further understanding of the invention and are incorporated in and constitute a part of the specification, illustrate embodiments of the invention and together with the description serve to explain the principle of the invention. In the drawings:
Fig. 1 is a plan view illustrating a conventional container wharf;
Fig. 2 is a perspective view illustrating the assembled-type automatic loading and unloading system according to the first preferred embodiment of the present invention;
Fig. 3 is a side view illustrating the assembled-type automatic loading and unloading system of the first preferred embodiment incorporated with a conventional hoist;
Fig. 4 is a top plan view illustrating the assembled-type automatic loading and unloading system of the first preferred embodiment;
Fig. 5 is a perspective view illustrating the relative position about the assembled-type automatic loading and unloading system of the first preferred embodiment, the shore at the port, the container ship, and the conventional hoist incorporated therewith;
Fig. 6 is a side view of the second preferred embodiment according to the present invention, similar to the Fig. 3 but integrated with a plurality of creative hoist; and
Fig. 7 is a top plan view of the second preferred embodiment according to the present invention, similar to the Fig. 4 but integrated with a plurality of creative hoist.

### Detailed Description of the Invention

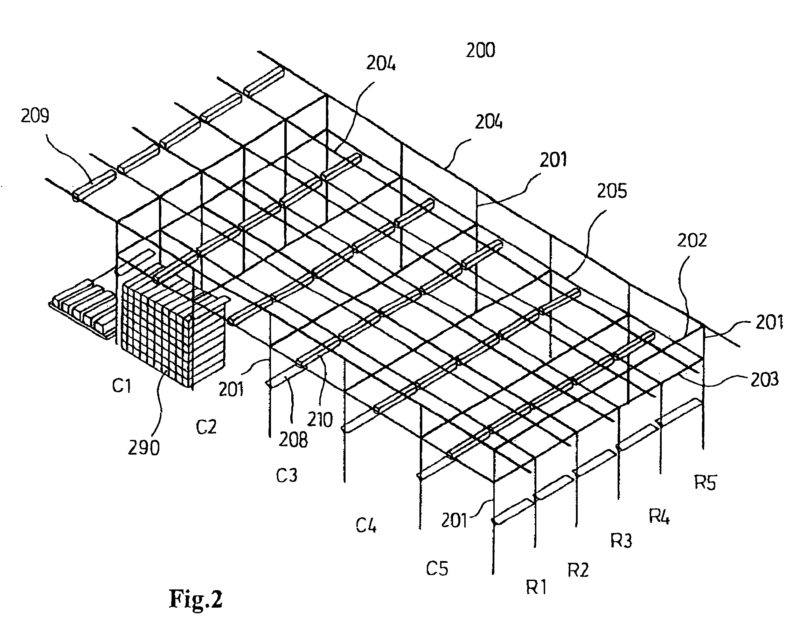

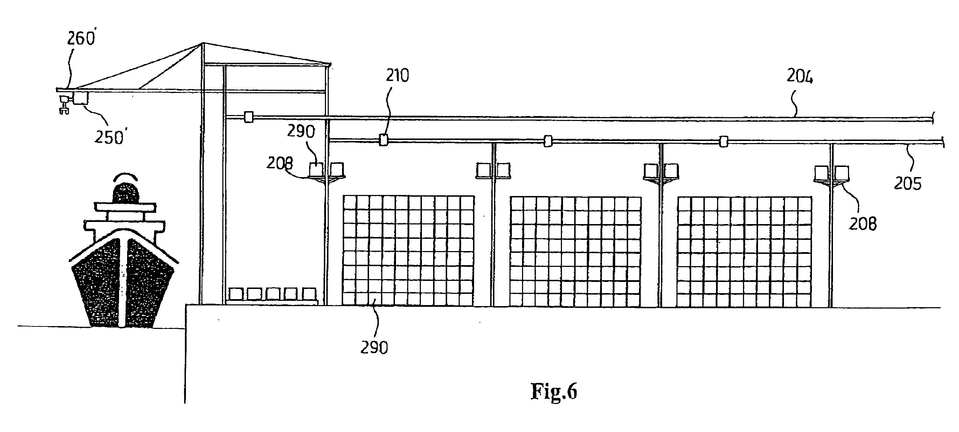

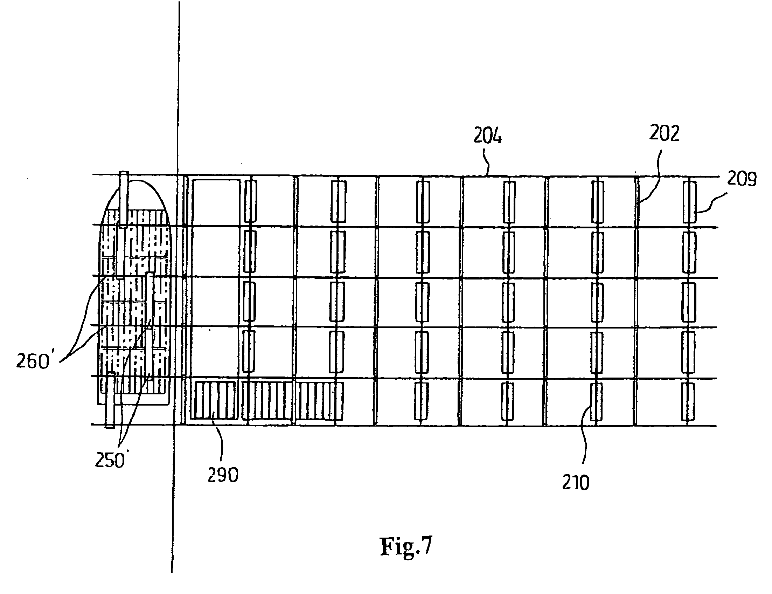

Fig. 2 to Fig. 5 illustrate the first preferred embodiment according to the present invention and Fig. 6,7 illustrate the second preferred embodiment.

Referring now to Fig. 2, the assembled-type automatic loading and unloading system of the first preferred embodiment according to the present invention includes a plurality of vertical frames 201, a plurality of transverse frames 202, 203, and a plurality of longitudinal frames 204, 205. All frames are perpendicularly connected with each other to form a main structure body 200. A plurality of transverse tracks 206 are provided at the side adjacent to the shore of the main structure body 200. Each transverse track 206 is provided with a cart 207 thereon. The opposite side of the main structure body 200 is the terminal for the trucks.

The main structure body 200 includes a plurality of cubic structure units, each of which is defined by the transverse frames 203, longitudinal frames 205, and four adjacent vertical frames 201 arranged in matrix. The structure units lined in the longitudinal direction are the column sub-structure bodies C1, C2, C3, C4, C5 and lined in the transverse direction are the row sub-structure bodies R1, R2, R3, R4, R5. The transverse frames 202, 203 and the longitudinal frames 204, 205 are all provided at the upper side of the main structure body 200. The longitudinal frames 204, 205 are arranged in two layers including the upper layer having the upper longitudinal frames 204 and the lower layer having the lower longitudinal frames 205.

Between adjacent vertical frames 201 in the same column is extended a platform 208 which can vertically travel between the lower longitudinal frame 205 and the particular position over the ground for temporarily placing the containers 290 during the operation of the container rearrangement and transportation. Each row sub-structure bodies R1, R2, R3, R4, R5 is respectively provided with a whole-area bridge crane 209 which extends between adjacent upper longitudinal frames 204 and can travel between the shore side and the truck terminal side to perform the container input and output operation of the present automatic loading and unloading system. Each structure unit is provided with a local gantry crane 210 which extends between adjacent lower longitudinal frames 205 and can only travel in the structure unit to perform the rearrangement of the containers 290.

The number of the transverse tracks 206 corresponds to that of the row sub-structure body R, that is, if there are five row sub-structure bodies R1, R2, R3, R4, R5, then there are five transverse tracks 206 each of which has a cart 207. The carts 207 can integrate the operation of container input and output in all the row sub-structure bodies R1, R2, R3, R4, R5 to coordinate with that of the hoist 250. Besides, when the truck terminal side is busy, the end of the transverse track 206 coordinated with the carts 207 can serve to input and output the containers 290.

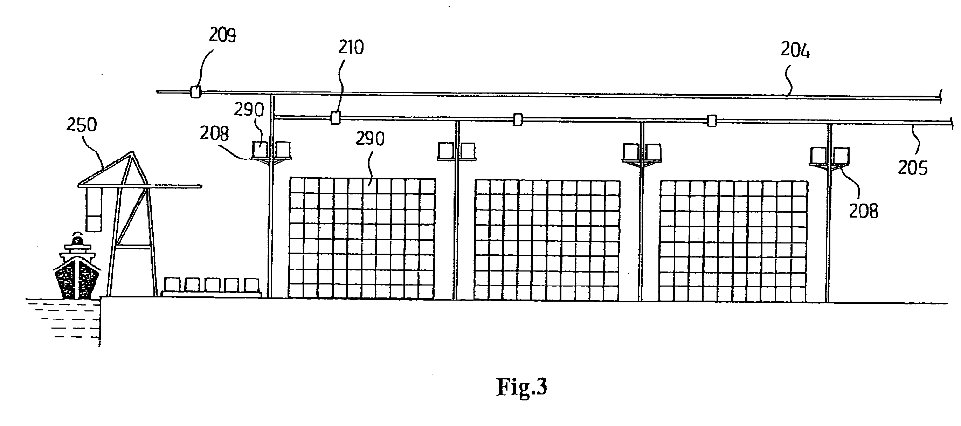

Fig. 3 only illustrates the side near the shore and corresponds to the column sub-structure bodies C1, C2 in Fig. 1. In this embodiment, the capacity of each structure unit is 80 containers which are arranged in 8 layers with 10 containers in each layer. There is a gap about 10 ~ 20 cm between adjacent containers for inserting a vertical spacer to increase the stability and convenience during container stacking.

According to the standard of the container specification, the safe stacking number is 9 containers; however, in consideration of probably further placing one container on the top of the container stack during rearrangement, the allowable maximum is 8 layers in the automatic system of the present invention. The number, generally set at 10, of the containers accommodated in each layer depends on that handled and scheduled at each port. As illustrated in Fig. 2, when the containers placed on the second layer in the structure unit of the column sub-structure body C1 must be drawn out, the local gantry crane 210 provided on the structure unit at first shifts the containers placed on the third to the eighth layers stacking on the second layer to another container stack, then hangs up the container set on the second layer and put that on the platform 208, and then proceeds next rearrangement process.

While the container desired to be drawn out is put on the platform, the whole-area bridge crane 209 hangs up it and takes it to the cart 207 or to the truck terminal side.

In case that the operation speed of the hoist 250 is 3 minutes per container and the system of the present invention has five row sub-structure bodies R1~R5, the operation including the rearrangement and transportation must be finished during 15 minutes in order to achieve the optimal container loading efficiency. In other word, if each longitudinal transportation and rearrangement can be finished during 15 minutes, five containers can be output from five row sub-structure bodies to carts 207 during 15 minutes, which matches the operation speed, 3 minutes per container, of the hoist 250.

The width and height of each structure unit depend on the number of the layers and that of the containers in each layer. For example, one structure unit needs 32 meters in width and 30 meters in height if it is arranged in 8 layers with 10 containers, each of which is 2.5 meters in size, with a gap between adjacent contains, and with platforms therein.

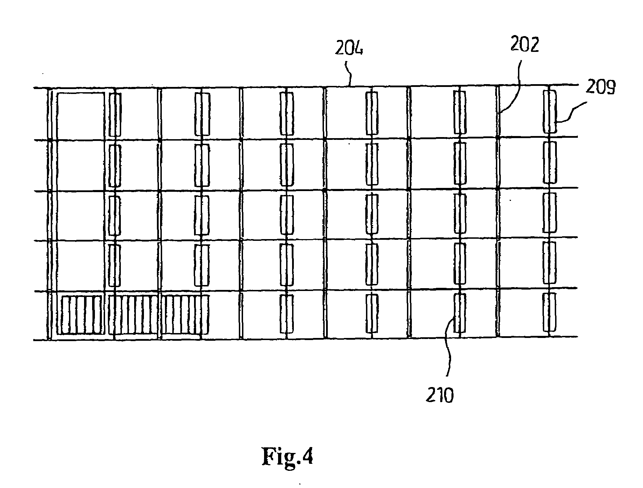

Fig. 4 illustrates that the depth, e.g. the distance between adjacent longitudinal frames 204, of the structure unit which accommodates the standard container, 12 m in size, is about 12.5m, slightly larger than 12 m.

The frames can be connected in different way such as soldering or riveting. Because there is not any concrete work in the whole main structure body 200, it can be modified in size according to the containers quantity handled at the port or the idle frames can be transported to and be utilized at another port.

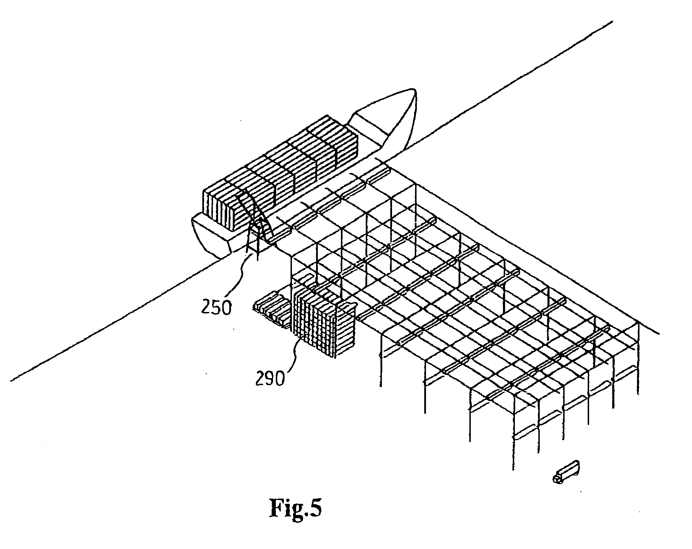

As illustrated in Fig. 5, upon the container 290 being taken to the truck terminal side by the truck, it can be directly and quickly carried onto the container ship. In the same way, the containers 290 can be quickly and automatically shifted from the container ship onto the trucks which then transport the containers out of the port.

According to the automatic container loading and unloading system of the present invention, upon the container 290 is carried to the temporal site, the computer records the related data including the entrance time, the serial number of structure unit, the row number, the layer number, the site number. Therefore, when a particular container is desired, the computer immediately indicates its site and controls the cranes to carry it out of the automatic container loading and unloading system of the present invention. The above-described operation significantly promotes the input/output speed and precision of the container.

All kinds of operations, including the transportation by the whole-area bridge crane, the local gantry crane going back to its original place, the container rearrangement by the local gantry crane, the optimal container arrangement...etc, of the present invention can be controlled by the computer to attend complete automation. In comparison with the current container wharf, the automatic container loading and unloading system, without any operator entering into the area where the containers 290 are temporally placed, of the present invention not only decreases the labor needed so as to upgrade the efficiency of the container transportation but significantly improves the safety in the container port.

The first preferred embodiment illustrated by Fig. 2 to Fig. 5 is aimed to incorporate the conventional hoist 250, installed at the current container center, with the main structure body 200 and into the computer control system so as to take advantage of the current hoist 250 having been installed at the dock and cost the container loading/unloading system down.

However, the second preferred embodiment illustrated by Fig. 6 to Fig. 7, for a wholly new container center, mechanically and electrically integrates a plurality of new hoists 250' with the automatic container loading and unloading system by respectively equipping them between two adjacent cantilever beams 260' parallel each other and extending from the main structure body 200 at the shore side. In addition, the adjacent hoists 250' offset each other in height so as to permit two adjacent hoists 250' partially overlapping from top plan view and exist no dead angle in transverse direction during loading and unloading operations.

This invention has been disclosed in terms of specific embodiments. It will be apparent that many modifications can be made to the disclosed structures without departing from the invention. Therefore, it is the intent of the appended claims to cover all such variations and modifications as come within the true sprit and scope of this invention.

## Claims

1. An assembled-type automatic container loading and unloading system, comprising:
a main structure body (200) having a plurality of vertical frames (201), a plurality of transverse frames (202, 203), and a plurality of longitudinal frames (204, 205), provided at an upper side of the main structure body (200) and including an upper longitudinal frame layer and a lower longitudinal frame layer, all kinds of frames being perpendicularly connected to each other, and the main structure body (200) having a first side, at which transverse tracks (206) parallel to the transverse frames (202, 203) are provided and each of the tracks (206) is equipped with a cart (207), and a second side, opposite to the first side, at which a loading and unloading area for land transportation is provided;
a whole-area bridge crane (209) extending between the adjacent upper longitudinal frames (204) of the upper layer and traveling between the first side and the second side;
a structure unit (C1-C5; R1-R5) defined by four adjacent vertical frames (201); and
a local gantry crane (210) extending between the adjacent lower longitudinal frames (205) of the lower layer in each of the structure unit (C1-C5; R1-R5) and longitudinally traveling in the structure unit.

2. An assembled-type automatic container loading and unloading system as claimed in claim 1, further comprising at least a hoist (250, 250') installed near the first side.

3. An assembled-type automatic container loading and unloading system as claimed in claim 1 or claim 2, further comprising at least a hoist (250, 250') integrated with the main structure body (200) at the first side.

4. An assembled-type automatic container loading and unloading system as claimed in claim 1 or 2 or 3, further comprising a platform (200), traveling up and down, extending between the adjacent vertical frames (202, 203) for temporally setting the container (290).

5. An assembled-type automatic container loading and unloading system as claimed in any one of claims 1-4, wherein the number of the structure units (R1-R5) lined in transverse direction is defined as that of the row structure bodies, the number of the structure units (C1-C5) lined in the longitudinal direction is defined as that of the column structure bodies, and the number of the transverse tracks (206) equals to that of the row structure units (R1-R5).

6. An assembled-type automatic container loading and unloading system as claimed in any one of claims 1-5, wherein the local gantry crane (210) and the whole-area bridge crane (209) are controlled by a computer system.

## Amended claims

### Amended claims in accordance with Rule 86(2) EPC.

**1.** An assembled-type automatic container loading and unloading system, comprising:
a main structure body (200) having a plurality of vertical frames (201), a plurality of transverse frames (202, 203), and a plurality of longitudinal frames (204, 205), provided at an upper side of the main structure body (200) and including an upper longitudinal frame layer and a lower longitudinal frame layer, all kinds of frames being perpendicularly connected to each other,
a whole-area bridge crane (209) extending between the adjacent upper longitudinal frames. (204) of the upper layer and traveling between the first side and the second side;
**characterized in that**
the main structure body (200) has a first side, at which transverse tracks (206) parallel to the transverse frames (202, 203) are provided and each of the tracks (206) is equipped with a cart (207), and a second side, opposite to the first side, at which a loading and unloading area for land transportation is provided and **in that** the system further comprises
a structure unit (C1-C5; R1-R5) defined by four adjacent vertical frames (201); and
a local gantry crane (210) extending between the adjacent lower longitudinal frames (205) of the lower layer in each of the structure unit (C1-C5; R1-R5) and longitudinally traveling in the structure unit.

**2.** An assembled-type automatic container loading and unloading system as claimed in claim 1, further comprising at least a hoist (250, 250') installed near the first side.

**3.** An assembled-type automatic container loading and unloading system as claimed in claim 1 or claim 2, further comprising at least a hoist (250, 250') integrated with the main structure body (200) at the first side.

**4.** An assembled-type automatic container loading and unloading system as claimed in claim 1 or 2 or 3, further comprising a platform (200), traveling up and down, extending between the adjacent vertical frames (202, 203) for temporally setting the container (290).

**5.** An assembled-type automatic container loading and unloading system as claimed in any one of claims 1-4, wherein the number of the structure units (R1-R5) lined in transverse direction is defined as that of the row structure bodies, the number of the structure units (C1-C5) lined in the longitudinal direction is defined as that of the column structure bodies, and the number of the transverse tracks (206) equals to that of the row structure units (R1-R5).

**6.** An assembled-type automatic container loading and unloading system as claimed in any one of claims 1-5, wherein the local gantry crane (210) and the whole-area bridge crane (209) are controlled by a computer system.
